# EUROPEAN PATENT APPLICATION

(11) **EP 3 113 004 A1**
(43) Date of publication of application: **04.01.2017**
(21) Application number: 14886992.8
(22) Date of filing: 25.03.2014
(51) Int. Cl.: G06F 3/0488

(54) **SCREEN UNLOCKING TECHNOLOGY**

(71) Applicant: Huawei Technologies Co. Ltd., Shenzhen, Guangdong 518129 (CN)
(72) Inventor: DING, Yi, Shenzhen Guangdong 518129 (CN)
(74) Representative: Pfenning, Meinig & Partner mbB
(86) International application number: PCT/CN2014/073994
(87) International publication number: WO 2015/143616

(57) **Abstract**

This patent application provides a method and an apparatus for unlocking a screen of an electronic device. The screen has a touch display screen that is substantially rectangular. When the screen is in a screen saving state, a motion track input by a user on the screen is received. When the motion track passes through a first area and a second area of the screen, the screen exits from the screen saving state. The first area is a screen area at a distance of less than a preset value m from a first edge of the screen, and the second area is a screen area at a distance of less than a preset value n from a second edge opposite to the first edge. The technology can unlock the screen saver based on a touch track that starts nearby the first edge of the screen and ends nearby the second edge of the screen, thereby implementing an easy-to-operate screen unlocking manner.

## Description

### TECHNICAL FIELD

The present invention relates to the user device field, and more specifically, relates to a method and an apparatus for unlocking a screen saver.

### BACKGROUND

With development of technologies, various user devices come into existence. The various user devices not only increasingly present personalization in appearance but also present personalized development in the application field. These personalized applications each have a batch of loyal users.

For the purpose of preventing a misoperation or reducing power consumption, a screen saver is usually set on a user device, and a subsequent operation can be performed on the user device only after the screen saver is unlocked. At present, an operation for unlocking the screen saver on the user device is not adequately flexible. For example, the screen saver can be unlocked only by dragging a designated icon on a screen. A user expects to use a more flexible unlocking manner.

### SUMMARY

In view of this, embodiments of the present invention provide a method and an apparatus for unlocking a screen saver, and provide a screen unlocking technology.

According to a first aspect, a method for unlocking a screen saver is provided, where the method is executed by an electronic device of a touchscreen, and the method includes: when a screen is in a screen saving state, receiving a motion track input by a user on the screen; and when the motion track passes through a first area and a second area of the screen, exiting from the screen saving state of the screen, where the first area is a screen area at a distance of less than a preset value m from a first edge of the screen, the second area is a screen area at a distance of less than a preset value n from a second edge of the screen, and the first edge and the second edge of the screen do not overlap.

In a first possible implementation manner of the first aspect, the screen of the touchscreen is substantially rectangular, and the first edge and the second edge are two opposite sides of the rectangular screen.

In a second possible implementation manner of the first aspect includes: the screen of the touchscreen is round or oval, there are a third edge and a fourth edge between the first edge and the second edge, and the first edge, the second edge, the third edge, and the fourth edge form edges of the screen of the touchscreen.

With reference to the first aspect or the foregoing possible implementation manners of the first aspect, in a third possible implementation manner includes: values of m and n are equal.

With reference to the first possible implementation manner of the first aspect, in a fourth possible implementation manner includes: the screen has long edges and wide edges, a length of the long edge is greater than a length of the wide edge, and the first edge and the second edge are opposite long edges.

With reference to the first aspect or the foregoing possible implementation manners of the first aspect, in a fifth possible implementation manner is: a value of m is 1 centimeter.

With reference to the first aspect or the foregoing possible implementation manners of the first aspect, a sixth possible implementation manner is: when the screen is in the screen saving state, the first area of the screen and the second area of the screen are presented differently on the screen.

With reference to the first aspect or the foregoing possible implementation manners of the first aspect, a seventh possible implementation manner is: starting from a point at which the motion track leaves the first area, an animated special effect is presented along with the motion track.

With reference to the first aspect or the foregoing possible implementation manners of the first aspect, an eighth possible implementation manner is: the first area is an area at a distance of less than or equal to m from the first edge and greater than or equal to g from the first edge; and the second area is an area at a distance of less than or equal to m from the second edge and greater than or equal to h from the second edge.

According to a second aspect, a device for unlocking a screen saver is provided, where the device includes a touch display screen, and the device includes a touch detection module and an unlocking module, where the touch detection module is configured to receive, by using a touchscreen controller, a motion track input by a user on the touchscreen; and the unlocking module is configured to: when a screen of the touchscreen is in a protection state, determine a first area and a second area, which the motion track passes through, on the screen of the touchscreen, and make the touchscreen exit the screen saving state, where the first area is a screen area at a distance of less than a preset value m from a first edge of the screen of the touchscreen, and the second area is a touchscreen area at a distance of less than a preset value n from a second edge of the screen of the touchscreen.

In a first possible implementation manner of the second aspect, the screen of the touchscreen is substantially rectangular, and the first edge and the second edge are two opposite sides of the rectangular screen.

In a second possible implementation manner of the second aspect, the screen of the touchscreen is round or oval, there are a third edge and a fourth edge between the first edge and the second edge, and the first edge, the second edge, the third edge, and the fourth edge form edges of the screen of the touchscreen.

With reference to the second aspect or the foregoing possible implementation manners of the second aspect, in a third possible implementation manner includes: values of m and n are equal.

With reference to the second aspect or the first possible implementation manner of the second aspect, in a fourth possible implementation manner includes: the screen has long edges and wide edges, a length of the long edge is greater than a length of the wide edge, and the first edge and the second edge are opposite long edges.

With reference to the second aspect or the foregoing possible implementation manners of the second aspect, a fifth possible implementation manner is: a value of m is 1 centimeter.

With reference to the second aspect or the foregoing possible implementation manners of the second aspect, a sixth possible implementation manner is: when the screen is in the screen saving state, the first area of the screen and the second area of the screen are presented differently on the screen.

With reference to the second aspect or the foregoing possible implementation manners of the second aspect, a seventh possible implementation manner is: starting from a point at which the motion track leaves the first area, an animated special effect is presented along with the motion track.

With reference to the second aspect or the foregoing possible implementation manners of the second aspect, an eighth possible implementation manner is: the first area is an area at a distance of less than or equal to m from the first edge and greater than or equal to g from the first edge; and the second area is an area at a distance of less than or equal to m from the second edge and greater than or equal to h from the second edge.

According to a third aspect, an apparatus for unlocking a screen saver, including a touch display screen and a processor, where the touch display screen is configured to: when a screen is in a screen saving state, receive a motion track input by a user on the screen; and the processor is configured to: when the motion track passes through a first area and a second area of the screen, make the screen exit the screen saving state, where the first area is a screen area at a distance of less than a preset value m from a first edge of the screen, and the second area is a screen area at a distance of less than a preset value n from a second edge of the screen of a touchscreen.

A first possible implementation manner of the third aspect includes: the screen of the touchscreen is substantially rectangular, and the first edge and the second edge are two opposite sides of the rectangular screen.

A second possible implementation manner of the third aspect includes: the screen of the touchscreen is round or oval, there are a third edge and a fourth edge between the first edge and the second edge, and the first edge, the second edge, the third edge, and the fourth edge form edges of the screen of the touchscreen.

With reference to the third aspect or the foregoing possible implementation manners of the third aspect, in a third possible implementation manner includes: values of m and n are equal.

With reference to the third aspect or the first possible implementation manner of the third aspect, in a fourth possible implementation manner includes: the screen has long edges and wide edges, a length of the long edge is greater than a length of the wide edge, and the first edge and the second edge are opposite long edges.

With reference to the third aspect or the foregoing possible implementation manners of the third aspect, a fifth possible implementation manner is: a value of m is 1 centimeter.

With reference to the third aspect or the foregoing possible implementation manners of the third aspect, a sixth possible implementation manner is: when the screen is in the screen saving state, the first area of the screen and the second area of the screen are presented differently on the screen.

With reference to the third aspect or the foregoing possible implementation manners of the third aspect, a seventh possible implementation manner is: starting from a point at which the motion track leaves the first area, an animated special effect is presented along with the motion track.

With reference to the third aspect or the foregoing possible implementation manners of the third aspect, an eighth possible implementation manner is: the first area is an area at a distance of less than or equal to m from the first edge and greater than or equal to g from the first edge; and the second area is an area at a distance of less than or equal to m from the second edge and greater than or equal to h from the second edge.

The foregoing technical solutions can implement screen unlocking conveniently.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic structural diagram of an apparatus for unlocking a screen saver according to an embodiment of the present invention;
FIG. 2 is a schematic flowchart of a method for unlocking a screen saver according to an embodiment of the present invention;
FIG. 3 is a schematic diagram of a screen according to an embodiment of the present invention;
FIG. 4 is a schematic diagram of a screen according to an embodiment of the present invention;
FIG. 5 is a schematic diagram of a screen according to an embodiment of the present invention;
FIG. 6 is a schematic diagram of a screen according to an embodiment of the present invention; and
FIG. 7 is a schematic diagram of presenting a preset animation effect according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

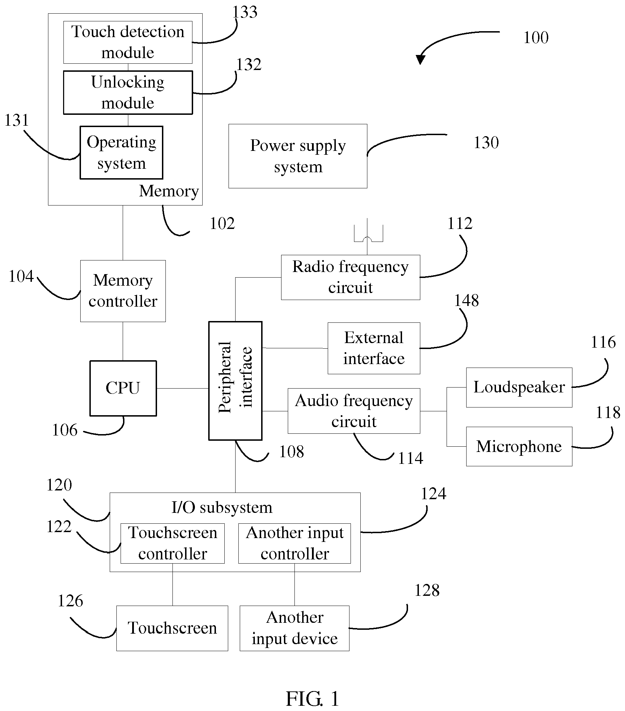

FIG. 1 is a schematic structural diagram of a portable electronic device 100 according to an embodiment of the present invention. The electronic device 100 includes a memory 102, a memory controller 104, one or more central processing units (CPU) 106, a peripheral interface 108, a radio frequency circuit 112, an audio frequency circuit 114, a loudspeaker 116, a microphone 118, an input/output (I/O) subsystem 120, a touchscreen 126, another output or control device 128, and an external interface 148. These components perform communication by using one or more communications buses or signal cables. The device 100 may be any portable electronic device, including but not limited to a handheld computer, a tablet, a mobile phone, a media player, a personal digital assistant (PDA), and the like, or a combination of one or more of these devices. A person skilled in the art should understand that the device 100 is only an example, components of the device 100 may be more or less than those shown in the figure, or may have another different component configuration. Various components shown in FIG. 1 may be implemented by using hardware, software, or a combination of software and hardware.

The memory 102 may be a high-speed random access memory or a nonvolatile memory, such as a disk memory device, a flash memory device, or another nonvolatile solid-state memory device.

The peripheral interface 108 couples input and output peripherals of the device to the CPU 106 and the memory 102. The CPU 106 runs various software program and/or instruction sets stored in the memory 102, so as to execute various functions of the device 100 and process data.

The radio frequency circuit 112 receives and sends an electromagnetic wave. The RF circuit 112 converts an electrical signal into an electromagnetic wave, or converts an electromagnetic wave into an electrical signal, and communicates with a communications network and another communications device over electromagnetic waves. The RF circuit 112 may include a circuit that is used to execute these functions, including but not limited to an antenna system, an RF transceiver, one or more amplifiers, a tuner, one or more oscillators, a digital signal processor, a CODEC chip set, a subscriber identity module (SIM) card, and a memory. The RF circuit 112 may communicate with a network or another device by means of radio communications. The network is, for example, the Internet which is also called World Wide Web (WWW), an intranet, and/or a wireless network such as a cellular phone network, a wireless local area network (LAN), and/or a metropolitan area network (MAN). The radio communications may use any one of multiple communications standards, protocols, and technologies, including but not limited to Global System for Mobile Communications (GSM), enhanced data GSM environment (EDGE), wideband code division multiple access

(W-CDMA), time division multiple access (TDMA), Bluetooth, wireless fidelity (Wi-Fi) (for example, IEEE 802.11a, IEEE 802.11b, IEEE802.11g and/or 802.11n), Voice over Internet Protocol (VoIP), Wi-MAX, a protocol for email, instant message transfer and/or a short message service (SMS), or any other appropriate communications protocol, including a communications protocol that has not been developed by the submission date of this document.

The audio frequency circuit 114, the loudspeaker 116, and the microphone 118 each provide an audio interface between a user and the device 100. The audio frequency circuit 114 receives audio data from the peripheral interface 108, converts the audio data into an electrical signal, and transfers the electrical signal to the loudspeaker 116. The loudspeaker 116 converts the electrical signal into an acoustic wave audible to human beings. The audio frequency circuit 114 also receives an electrical signal that is converted from an acoustic wave by the microphone 116. The audio frequency circuit 114 converts the electrical signal into audio data, and transfers the audio data to the peripheral interface 108 for processing. Audio data may be acquired by the peripheral interface 108 from the memory 102 and/or the RF circuit 112, and/or transferred to the memory 102 and/or the RF circuit 112.

The I/O subsystem 120 provides an interface between an input/output peripheral of the device 100 and the peripheral interface 108, where the input/output peripheral is, for example, the touchscreen 126 and the another input/control device 128. The I/O subsystem 120 includes a touchscreen controller 122 and one or more input controllers 124 that are used for the another output or control device. The one or more input controllers receive/send an electrical signal from/to the another input or control device 128. The another input/control device 128 may include a physical button, a dial, a slider switch, a joystick, and the like.

The touchscreen 126 serves as an output interface and an input interface between the device 100 and the user. The touchscreen controller 122 receives from/sends to the touchscreen 126 an electrical signal. The touchscreen 126 displays a visual output to the user. The visual output may include text, a graph, and the like.

The touchscreen 126 further receives a user input by detecting a touch. The touchscreen 126 converts the touch obtained by detection into an interaction with a user object of one or more softkeys that are displayed on the touchscreen 126. An LCD (liquid crystal display) or an LPD (light emitting polymer display) may be used as the touchscreen 126, but another display technology may be used in another embodiment. The touchscreen 126 and the touchscreen controller 122 may use any one of multiple touch-sensitive technologies to detect contact and motion or interruption. These touch-sensitive technologies include but are not limited to capacitive, resistive, infrared, and surface acoustic wave technologies, as well as other sensor arrays and other technologies for determining one or more points of contact with the touchscreen 126.

The device 100 further includes a power supply system 130 that is used for supplying power to various components. The power supply system 130 may include a power supply management system, one or more power sources (for example, a battery, an alternating current (AC), a power supply system, a power supply fault detection circuit, a power converter or a power inverter, and a power status indicator (for example, a light emitting diode (LED)), and other components related to electrical energy generation, management, and distribution in a portable device.

An operating system 132 is stored in the memory 102 and can be executed by the CPU 106. The operating system 132 may be, for example, Darwin, RTXC, LINUX, UNIX, OS X, WINDOWS, or an embedded operating system such as Vxworks.

A touch detection module 133, together with the touchscreen controller 122, detects a contact signal received by the touchscreen 126. The touch detection module 133 includes various software components that are used to execute various operations related to contact and detection of the touchscreen 122. The various operations include determining whether contact occurs, determining whether the contact moves, tracking a motion on the touchscreen, and determining whether the contact is interrupted (that is, whether a contact state ceases). An operation of determining motion of a contact point may include determining a speed, a velocity, and/or an acceleration of the contact point. In some embodiments, the touch detection module 126 and the touchscreen controller 122 further detect contact on a touch panel.

The device 100 may have multiple user interface states. A user interface state is a state that the device 100 responds to an input of the user in a predetermined manner. In some embodiments, the multiple user interface states include a user interface protection state and a user interface unlock state.

In the user interface protection state (called "protection state" hereinafter), the device 100 is applied with power and can be operated, but most user inputs are ignored. In other words, the device 100 does not respond to most of the user inputs or execute a corresponding action, and/or the device 100 does not respond to most of the user inputs or execute a predetermined operation set. The predetermined operation set may include navigating between user interfaces, and activating or disabling a predetermined function set. The protection state may be used to prevent the device 100 from being used unintentionally or without authorization, or prevent a function of the device 100 from being activated. When the device 100 is in a screen saving state, it indicates that the device 100 is being protected. In some embodiments, the device 100 in the protection state may respond to a set of limited user inputs, where the inputs include changing the device 100 to the user interface unlocking state.

In the user interface unlocking state, the device 100 is in a normally working state, and detects and responds to a user input corresponding to interaction with a user interface.

In this embodiment of the present invention, a screen is unlocked when a touch track, input by the user, from one side of a screen across another side is detected.

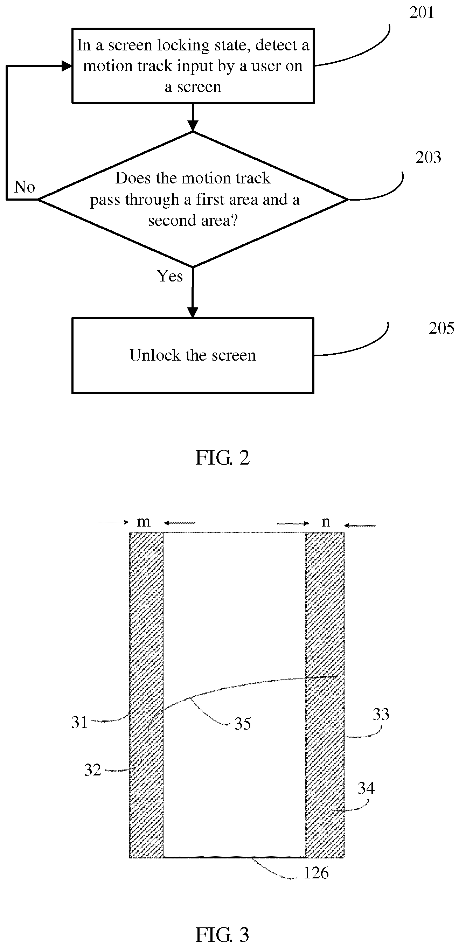

Specifically, implementation of this embodiment is further described in combination with FIG. 2. In this embodiment, multiple operations are presented in a specific sequence. However, a person skilled in the art should be clear that an unlocking process may include more or less operations, and some operations may be performed in another sequence or may be performed concurrently.

In step 201, the touchscreen 126 is in a screen saver state. As described above, the user may perform an operation for unlocking a screen. When the user comes into contact with the screen, the touchscreen 126 transfers, to the touch detection module 133 by using the touchscreen controller 122, track information input by the user by using the touchscreen 126. The touch detection module 133 transfers the track information to an unlocking module 132. Certainly, the touch detection module 133 may share touch track information detected by the touchscreen 126 to the unlocking module 132 in any manner.

In step 203, the unlocking module 132 determines whether a motion track of touch passes a first area and a second area that are preset on the screen. If yes, unlock the screen

(step 205); if not, go back to step 201, where the touchscreen 126 retains in the protection state, and a track input by the user on the touchscreen 126 is detected.

Referring to FIG. 3, a device 100 has a touchscreen 126 that is substantially rectangular. An area at a distance of less than or equal to a preset value m from a first edge 31 of a screen of the touchscreen 126 is set to a first area 32. The other side, opposite to the first edge 31, of the screen is used as a second edge 33. The first edge 31 and the second edge 33 of the screen do not overlap. An area at a distance of less than n from the second edge 33 is set to a second area 34. When it is detected that a touch track 35 input by a user passes through the first area 32 and the second area 34, the screen is unlocked (step 205). Otherwise, the process goes back to step 201.

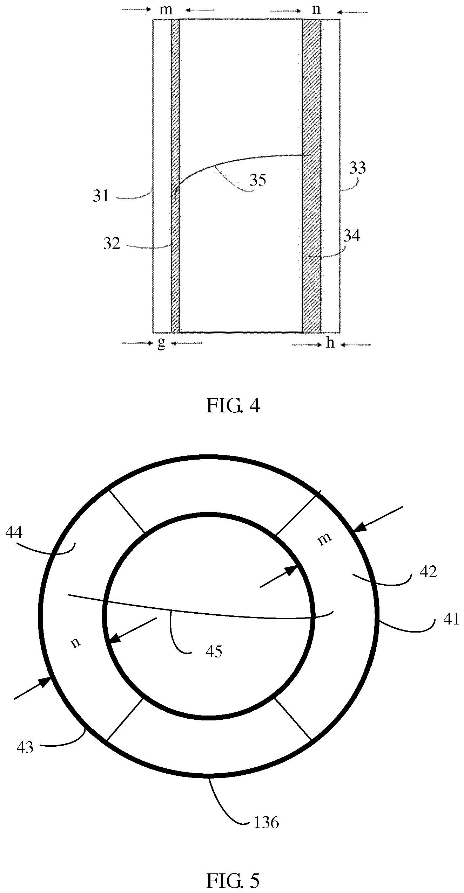

In an optional implementation manner, as shown in FIG. 5, the first area 32 may be further limited to be an area at a distance of less than or equal to the preset value m from the first edge 31 and greater than or equal to a preset value g from the first edge 31. Similarly, the second area 34 may be further limited to be an area at a distance of less than or equal to a preset n from the second edge 33 and greater than or equal to a preset value h from the second edge 33. The first area 32 and the second area 34 shown are kept in a distance from the first edge 31 and the second edge 33. In a possible implementation manner, the first area 32 or the second area 34 may be a line.

In an optional implementation manner, when the touchscreen 126 is rectangular, the touchscreen 126 has long edges and wide edges, and a length of the long edge is greater than a length of the wide edge. The first edge 31 and the second edge 33 are opposite long edges. Certainly, the first edge 31 and the second edge 33 may be opposite wide edges. When a screen is square, the first edge 31 and the second edge 33 are any two opposite sides.

In an optional implementation manner, referring to FIG. 5, a screen of a device 100 may be a substantially round or oval touchscreen 136. An area at a distance of less than or equal to a preset m from a first edge 41 of the screen of the touchscreen 136 is set to a first area 42. The other side, opposite to the first edge 41, of the screen is used as a second edge 43. An area at a distance of less than n from the second edge 43 is set to a second area 44. When it is detected that a touch track 45 input by a user passes the first area 42 and the second area 44, the screen is unlocked (step 205). Otherwise, the process goes back to step 201. There are a third edge 47 and a fourth edge 48 between the first edge 41 and the second edge 43. The first edge 41, the second edge 42, the third edge 47, and the fourth edge 48 form edges of the screen of the touchscreen 136.

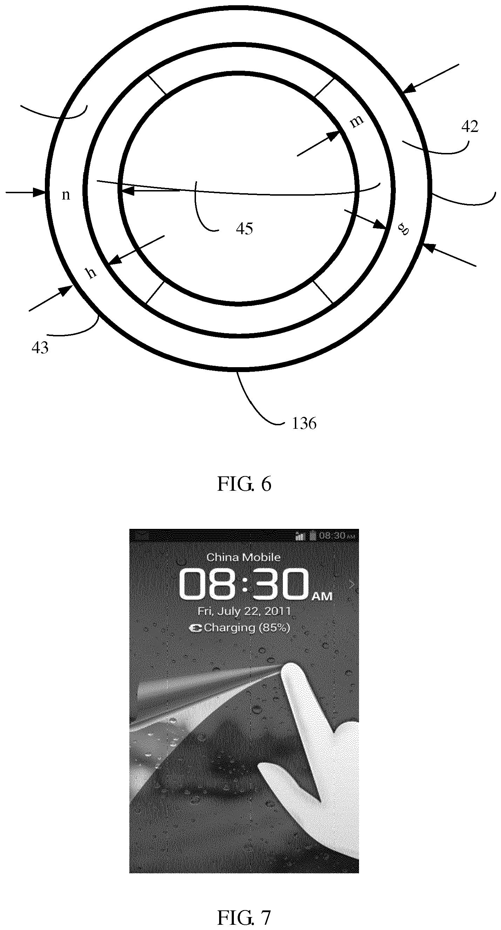

In an optional implementation manner, referring to FIG. 6, the first area 42 may be further limited to be an area at a distance of less than or equal to a preset value m from the first edge 41 and greater than or equal to a preset value g from the first edge 41. Similarly, the second area 44 may be further limited to be an area at a distance of less than or equal to a preset n from the second edge 43 and greater than or equal to a preset value h from the second edge 43. The first area 42 and the second area 44 shown are kept in a distance from the first edge 41 and the second edge 43. In a possible implementation manner, the first area 42 or the second area 44 may be a line.

In an optional implementation manner, values of m and n may be set to be equal, for example, both are set to 1 centimeter or another value.

In an optional implementation manner, to help a user understand positions of the first areas 32 and 42 and the second areas 34 and 44, when touchscreens 126 and 136 are in a screen saving state, the first areas 32 and 42 and the second areas 34 and 44 are presented differently on the touchscreens 126 and 136. For example, the first areas 32 and 42 and the second areas 34 and 44 are presented in a color different from that of other areas of the touchscreens 126 and 136, or in another display manner that distinguishes the first areas 32 and 42 and the second areas 34 and 44 from other display areas of the screens.

In an optional implementation manner, to display a personalized unlocking effect, starting from a point at which motion tracks 35 and 45 leave the first areas 32 and 42, an animated special effect is presented along with the motion tracks 35 and 45. As shown in FIG. 7, an animated special effect is presented along with the motion tracks 35 and 45. Certainly, the motion tracks 35 and 45 of a user may also start in the second areas 34 and 44 and end in the first areas 32 and 42. In this case, similarly, starting from a point at which the motion tracks 35 and 45 leave the second areas 34 and 44, an animated special effect is presented along with the motion tracks.

A person of ordinary skill in the art may be aware that the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use a different method to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division may be logical function division or may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate. Parts displayed as units may or may not be physical units, and may be located in one position or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a portable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for unlocking a screen saver, executed by an electronic device that has a touchscreen, comprising:
when a screen of the touchscreen is in a screen saving state, receiving a motion track input by a user on the touchscreen; and
determining a first area and a second area, which the motion track passes through, on the screen of the touchscreen, and exiting from the screen saving state, wherein
the first area is a screen area at a distance of less than a preset value m from a first edge of the screen, the second area is a screen area at a distance of less than a preset value n from a second edge of the screen, and the first edge and the second edge of the screen do not overlap.

2. The method according to claim 1, wherein the screen of the touchscreen is substantially rectangular, and the first edge and the second edge are two opposite sides of the rectangular screen.

3. The method according to claim 1, wherein the screen of the touchscreen is round or oval, there are a third edge and a fourth edge between the first edge and the second edge, and the first edge, the second edge, the third edge, and the fourth edge form edges of the screen of the touchscreen.

4. The method according to claim 1, wherein values of m and n are equal.

5. The method according to claim 1, wherein when the screen is in the screen saving state, the first area of the screen and the second area of the screen are presented differently on the screen.

6. The method according to claim 1, wherein starting from a point at which the motion track leaves the first area, an animated special effect is presented along with the motion track.

7. The method according to claim 1, wherein the first area is an area at a distance of less than or equal to m from the first edge and greater than or equal to g from the first edge; and the second area is an area at a distance of less than or equal to m from the second edge and greater than or equal to h from the second edge.

8. An electronic device for unlocking a screen saver, wherein the device has a touchscreen, and the device comprises a touch detection module and an unlocking module, wherein
the touch detection module is configured to receive, by using a touchscreen controller, a motion track input by a user on the touchscreen; and
the unlocking module is configured to: when a screen of the touchscreen is in a screen saving state, determine a first area and a second area, which the motion track passes through, on the screen of the touchscreen, and make the touchscreen exit the screen saving state, wherein
the first area is a screen area at a distance of less than a preset value m from a first edge of the screen of the touchscreen, and the second area is a touchscreen area at a distance of less than a preset value n from a second edge of the screen of the touchscreen.

9. The device according to claim 8, wherein the screen of the touchscreen is substantially rectangular, and the first edge and the second edge are two opposite sides of the rectangular screen.

10. The device according to claim 8, wherein the screen of the touchscreen is round or oval, there are a third edge and a fourth edge between the first edge and the second edge, and the first edge, the second edge, the third edge, and the fourth edge form edges of the screen of the touchscreen.

11. The apparatus according to claim 9, wherein the touchscreen has long edges and wide edges, a length of the long edge is greater than a length of the wide edge, and the first edge and the second edge are opposite long edges.

12. The apparatus according to claim 9, wherein the touchscreen has long edges and wide edges, a length of the long edge is greater than a length of the wide edge, and the first edge and the second edge are opposite wide edges.

13. The apparatus according to claim 8, wherein when the touchscreen is in the screen saving state, the first area of the touchscreen and the second area of the touchscreen are presented differently on the touchscreen.

14. The apparatus according to claim 8, wherein starting from a point at which the motion track leaves the first area, an animated special effect is presented along with the motion track.

15. The apparatus according to claim 8, wherein the first area is an area at a distance of less than or equal to m from the first edge and greater than or equal to g from the first edge; and the second area is an area at a distance of less than or equal to m from the second edge and greater than or equal to h from the second edge.

16. An apparatus for unlocking a screen saver, comprising a touchscreen and a processor,
wherein
the touchscreen is configured to receive a motion track input by a user on the touchscreen; and
the processor is configured to: when the touchscreen is in a protection state, determine a first area and a second area, which the motion track passes through, on the touchscreen, and make the touchscreen exit a screen saving state, wherein
the first area is a touchscreen area at a distance of less than a preset value m from a first edge of a screen of the touchscreen, and the second area is a touchscreen area at a distance of less than a preset value n from a second edge of the screen of the touchscreen.

17. The method according to claim 16, wherein the screen of the touchscreen is substantially rectangular, and the first edge and the second edge are two opposite sides of the rectangular screen.

18. The method according to claim 16, wherein the screen of the touchscreen is round or oval, there are a third edge and a fourth edge between the first edge and the second edge, and the first edge, the second edge, the third edge, and the fourth edge form edges of the screen of the touchscreen.

19. The apparatus according to claim 16, wherein values of m and n are equal.

20. The apparatus according to claim 17, wherein the touchscreen has long edges and wide edges, a length of the long edge is greater than a length of the wide edge, and the first edge and the second edge are opposite long edges.

21. The apparatus according to claim 16, wherein the first area is an area at a distance of less than or equal to m from the first edge and greater than or equal to g from the first edge; and the second area is an area at a distance of less than or equal to m from the second edge and greater than or equal to h from the second edge.
